# EUROPÄISCHE PATENTSCHRIFT

(11) **EP 4 030 337 B1**
(45) Veröffentlichungstag und Bekanntmachung des Hinweises auf die Patenterteilung: **13.03.2024**
(21) Anmeldenummer: 21151994.7
(22) Anmeldetag: 18.01.2021
(51) Int. Cl.: G06K 7/14, G06T 7/00

(54) **OPTISCHER SENSOR UND VERFAHREN ZUR ERFASSUNG VON CODES**
OPTICAL SENSOR AND METHOD FOR DETECTING CODES
CAPTEUR OPTIQUE ET PROCÉDÉ DE DÉTECTION DES CODES

(43) Veröffentlichungstag der Anmeldung: 20.07.2022
(73) Patentinhaber: Leuze electronic GmbH + Co. KG, 73277 Owen/Teck (DE)
(72) Erfinder: Struckmeier, Anselm, 73277 Owen/Teck (DE); Sanzi, Dr., Friedrich, 73230 Kirchheim/Teck (DE)
(74) Vertreter: Ruckh, Rainer Gerhard

(56) Entgegenhaltungen:
- EP-A1- 3 428 834
- EP-A2- 0 419 226
- EP-B1- 3 428 834
- DE-A1- 10 137 093
- DE-A1-102004 059 604
- US-A1- 2019 325 183

## Beschreibung

Die Erfindung betrifft einen optischen Sensor und ein Verfahren zur Erfassung von Codes.

Derartige als Codeleser ausgebildete optische Sensoren dienen insbesondere zur Detektion von Barcodes. Die optischen Sensoren sind typischerweise als Scanner oder kamerabasierte Sensoren ausgebildet. Bei einem optischen Sensor in Form eines Scanners werden von einem Sender emittierte Lichtstrahlen mittels einer Ablenkeinheit periodisch innerhalb eines Erfassungsbereichs abgelenkt und dabei über einen zu detektierenden Barcode geführt. Die dadurch am Empfänger des optischen Sensors generierten Empfangssignale bilden ein amplitudenmoduliertes Intensitätssignal, wobei die Amplitudenmodulation entsprechend dem Kontrastmuster des Barcodes ausgebildet ist. Bei einem kamerabasierten optischen Sensor ist als Empfänger ein Bildsensor vorgesehen, mit dem ebenfalls ein amplitudenmoduliertes Intensitätssignal des Barcodes erhalten wird.

Die Codeerfassung erfolgt typischerweise derart, dass die Empfangssignale des Empfängers differenziert werden und dann über einen Analog-Digital-Wandler einer Auswerteeinheit zugeführt werden, wo anhand der differenzierten und mit dem Analog-Digital-Wandler abgetasteten und digitalisierten Empfangssignale eine Dekodierung des Codes erfolgt. Hierzu werden die Kantenlagen von in den Codes vorhandenen Hell-Dunkel-Übergängen anhand der Extremstellen des differenzierten, abgetasteten Empfangssignals bestimmt.

Ein wesentliches Problem besteht darin, dass aufgrund der in den Applikationen auftretenden sehr unterschiedlichen Lesesituationen die Pegel der bei der Abtastung von Codes erhaltenen Empfangssignale sehr stark variieren. Dies führt dazu, dass der begrenzte Aussteuerbereich des Analog-Digital-Wandlers überschritten wird, so dass das Signal am Ausgang des Analog-Digital-Wandlers begrenzt wird. Diese Begrenzung verursacht, dass Informationen der differenzierten Empfangssignale, insbesondere Informationen über Kantenlagen, die für die Erfassung von Codes wesentlich sind, verloren gehen. Dies wiederum führt zu Fehldetektionen bei der Detektion der Codes.

Prinzipiell kann diesem Problem dadurch begegnet werden, dass Kompressionsschaltungen eingesetzt werden, mittels derer die Pegel der Empfangssignale künstlich begrenzt werden. Da mit diesen Kompressionsschaltungen nur die Nutzsignalanteile, nicht aber die Rauschanteile der Empfangssignale reduziert werden, wird der Signal-/Rauschabstand in den Empfangssignalen reduziert, was wiederum zu fehlerhaften Codedetektionen führt.

Die DE 101 37 093 A1 betrifft ein Verfahren zum Erkennen eines Codes, bei dem der Code innerhalb einer Bildumgebung lokalisiert und/oder identifiziert wird. Dieser Schritt wird mittels eines neuronalen Netzwerkes durchgeführt. Die Erfindung betrifft ferner einen entsprechenden Codeleser.

In der EP 3 428 834 A1 wird ein optoelektronischer Codeleser, insbesondere Barcodeleser, mit mindestens einem Lichtempfangselement zur Erzeugung von Bilddaten aus Empfangslicht und mit einer Auswertungseinheit angegeben, in der ein Klassifikator implementiert ist, der Codebereichen der Bilddaten eine Codeinformation zuordnet, wobei der Klassifikator für ein maschinelles Lernen ausgebildet ist und mittels überwachtem Lernen anhand von gelesenen Codes eines klassischen Decoders trainiert ist, der mit Verfahren ohne maschinelles Lernen arbeitet.

In der US 2019/0325183 A1 ist ein Codeleser mit einer Kamera beschrieben. Durch eine intensitätsabhängige Bildverarbeitung werden in Kamerabildern vorhandene Codes detektiert.

In DE 10 2004 059 604 A1 betrifft eine optoelektronische Vorrichtung zur Erfassung von Kontrastmustern aufweisenden Marken, mit einem Sendelichtstrahlen emittierenden Sender, einem Empfangslichtstrahlen empfangenden Empfänger, einer Ablenkeinheit zur periodischen Ablenkung der Sendelichtstrahlen innerhalb eines Abtastbereichs, und mit einer Auswerteeinheit, in welcher zur Dekodierung der Marken die den Empfangslichtstrahlen durch die Kontrastmuster aufgeprägten Amplitudenmodulationen ausgewertet werden. Der Sender und der Empfänger bilden zudem ein nach dem Phasenmessprinzip arbeitendes Distanzsensorelement. Zur Elimination von Störsignalanteilen bei der Kontrastmusterdetektion erfolgt in der Auswerteeinheit eine Verknüpfung von ermittelten Distanzwerten und Amplitudenwerten der Empfangssignale des Empfängers.

Die EP 0 419 226 A2 betrifft einen Barcodeleser mit einem Signalprozessor. Der Signalprozessor weist einen Differenzierer und eine Filtereinheit auf
Der Erfindung liegt die Aufgabe zugrunde, bei einem optischen Sensor der eingangs genannten Art die Fehlersicherheit bei der Detektion von Codes zu verbessern.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Codes, mit einem Lichtstrahlen emittierenden Sender und einem Lichtstrahlen empfangenden Empfänger, welche zur Abtastung von Codes ausgebildet sind, und mit einer Auswerteeinheit, welche zur Ermittlung von Codeinformationen der Codes in Abhängigkeit von Empfangssignalen des Empfängers ausgebildet ist. Die Empfangssignale des Empfängers sind einer Auswerteschaltung zugeführt, in welcher aus den Empfangssignalen abgetastete Empfangssignale generiert werden. Ein neuronales System ist vorgesehen, wobei die Auswerteschaltung einen Differenzierer, in welchem die Empfangssignale differenziert werden, und einen diesem nachgeordneten Analog-Digital-Wandler aufweist. Die im Analog-Digital-Wandler generierten abgetasteten Empfangssignale werden der Auswerteeinheit zugeführt, wobei das neuronale System Bestandteil der Auswerteeinheit ist. Die Auswerteeinheit weist eine Einheit zur Kantendetektion auf, wobei durch das neuronale System durch die Begrenzung der Pegel der Empfangssignale verloren gegangene Codeinformationen zumindest teilweise wiedergewonnen und dadurch Begrenzungen der Pegel der abgetasteten Empfangssignale kompensiert werden.

Die Erfindung betrifft weiterhin ein Verfahren zur Erfassung von Codes.

Der Grundgedanke der Erfindung besteht somit darin, in den abgetasteten Empfangssignalen am Ausgang der Auswerteschaltung vorhandene Begrenzungen mit einem neuronalen System zu kompensieren. Mit der im neuronalen System durchgeführten Kompensation kann zumindest näherungsweise die Begrenzung der abgetasteten Empfangssignale, die durch die Auswerteschaltung verursacht ist, zumindest teilweise wieder rückgängig gemacht werden. Damit können Informationen über abgetastete Codes, die durch die Begrenzung verloren gingen, zumindest teilweise wiedergewonnen werden. Dadurch kann die Fehlersicherheit bei der Detektion der Codes erheblich erhöht werden.

Erfindungsgemäß weist die Auswerteschaltung einen Differenzierer, in welchem die Empfangssignale differenziert werden, und einen diesem nachgeordneten Analog-Digital-Wandler auf.

Daran angepasst weist die Auswerteeinheit eine Einheit zur Kantendetektion auf.

Anhand der im Differenzierer differenzierten Empfangssignale erfolgt in der Einheit zur Kantendetektion die Bestimmung von Kantenlagen von Hell-Dunkel-Übergängen von gelesenen Codes dadurch, dass die Extremstellen in den differenzierten Empfangssignalen bestimmt werden.

Um die im Differenzierer differenzierten Empfangssignale der Auswerteeinheit und der darin integrierten Einheit zur Kantendetektion zuzuführen, werden diese im Analog-Digital-Wandler abgetastet und digitalisiert. Die so am Ausgang des Analog-Digital-Wandler anstehenden abgetasteten Empfangssignale können dann direkt in die Auswerteeinheit eingelesen werden.

Aufgrund der unterschiedlichen Lesesituationen in den Applikationen, in welchen der optische Sensor eingesetzt wird, variieren die Pegel der Empfangssignale sehr stark, so dass diese im Analog-Digital-Wandler aufgrund dessen begrenzten Aussteuerbereichs begrenzt werden, wodurch Informationen in den Empfangssignalen über die gelesenen Codes verloren gehen.

Durch das dem Analog-Digital-Wandler nachgeordnete und der Einheit zur Kantendetektion vorgeordnete neuronale System können die durch die Begrenzung des Analog-Digital-Wandlers verlorengegangenen Codeinformationen zumindest teilweise wiedergewonnen werden, so dass eine sichere Dekodierung und damit Erfassung des Codes gewährleistet ist.

Der erfindungsgemäße optische Sensor ist vorteilhaft als Scanner oder als Kamerasensor ausgebildet.

Zweckmäßig ist dabei der optische Sensor zur Erfassung von Barcodes ausgebildet.

Die Barcodes bestehen aus einer linearen Folge von hellen und dunklen Modulen. Zur Dekodierung der Barcodes werden die Kantenlagen der Hell-Dunkel-Übergänge dieser Module erfasst.

Vorteilhaft ist der optische Sensor derart ausgebildet, dass mit diesem innerhalb eines Lesebereichs Codes erfassbar sind.

Damit können mit dem optischen Sensor Codes nicht nur in einem einzigen Leseabstand sondern in einem ausgedehnten Lesebereich erfasst werden, was generell durch geeignete Optikelemente, die dem Sender und/oder Empfänger des optischen Sensors zugeordnet sind, erreicht wird.

Das neuronale System kann dabei vorteilhaft als neuronales Netz ausgebildet sein.

Damit mit dem neuronalen System in abgetasteten Empfangssignalen verlorengegangene Codeinformationen wiederhergestellt werden können, sind für ein Training eine Anzahl von abgetasteten Empfangssignalen und zugeordneten Soll-Ausgangssignalen am Ausgang des neuronalen Systems vorgegeben.

Dabei werden zweckmäßig im Training abgetastete Empfangssignale und zugeordnete Soll-Ausgangssignale für unterschiedliche Lesesituationen vorgegeben.

Mit dem Training werden die Parameter des neuronalen Systems bestimmt, wobei vorteilhaft ist, wenn die hierzu verwendeten abgetasteten Empfangssignale und Soll-Ausgangssignale möglichst viele unterschiedliche Lesesituationen abdecken, so dass eine entsprechend breite und umfangreiche Anpassung des neuronalen Netzes an die möglichen Lesesituationen gegeben ist.

Die unterschiedlichen Lesesituationen können unterschiedliche Rauschamplituden, Signalfrequenzen oder auch unterschiedliche Verhältnisse der Fleckdurchmesser der Lichtstrahlen des optischen Sensors im Verhältnis zu Modulbreiten von zu lesenden Codes sein.

Durch das auf diese Weise durchgeführte Training ist es möglich, dass das neuronale System zur Durchführung einer Rauschunterdrückung ausgebildet ist.

Weiterhin kann mittels des neuronalen Systems der Lesebereich des optischen Sensors vergrößerbar sein.

Damit wird die Funktionalität des erfindungsgemäßen optischen Sensors erheblich verbessert.

Die Erfindung wird im Folgenden anhand der Zeichnungen erläutert. Es zeigen:
- Figur 1:: Erstes Ausführungsbeispiel von Sensorkomponenten des erfindungsgemäßen optischen Sensors.
- Figur 2:: Zweites Ausführungsbeispiel von Sensorkomponenten des erfindungsgemäßen optischen Sensors.
- Figur 3:: Blockschaltbild des erfindungsgemäßen optischen Sensors.
- Figur 4:: Zeitlicher Verlauf von abgetasteten Empfangssignalen am Ausgang der Auswerteschaltung des optischen Sensors gemäß Figur 3.
- Figur 5:: Vergrößerte Teildarstellung der Verläufe gemäß Figur 4.
- Figur 6:: Zeitlicher Verlauf der Ausgangssignale des neuronalen Systems des optischen Sensors gemäß Figur 3 im Vergleich zu Soll-Ausgangssignalen.
- Figur 7:: Vergrößerte Teildarstellung der Verläufe gemäß Figur 6.

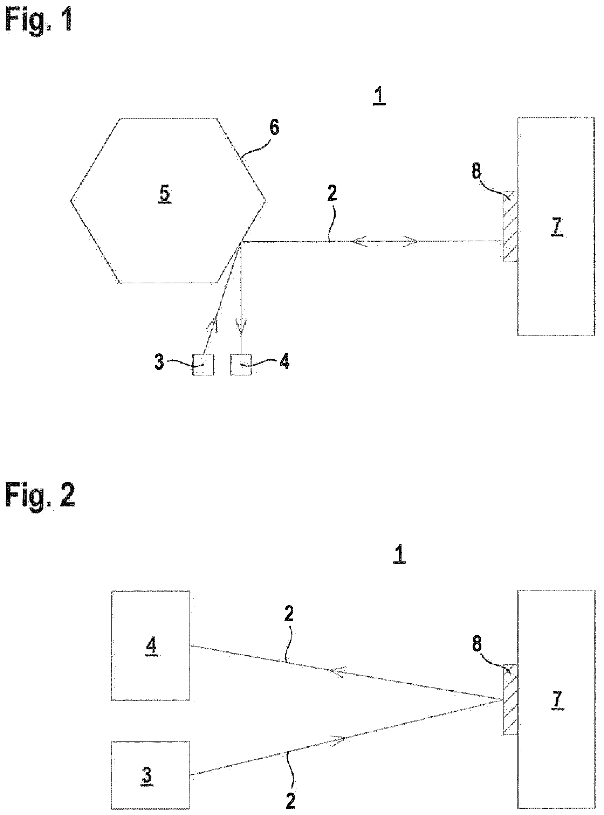

Figur 1 zeigt ein Ausführungsbeispiel der optischen Sensorkomponenten des erfindungsgemäßen optischen Sensors 1, welcher als Codeleser, und spezifisch als Barcodeleser ausgebildet ist.

Der optische Sensor 1 weist einen Lichtstrahlen 2 emittierenden Sender 3 und einen Lichtstrahlen 2 empfangenden Empfänger 4 auf. Der Sender 3 kann von einer Leuchtdiode oder Laserdiode gebildet sein, der Empfänger 4 kann von einer Photodiode gebildet sein. Die Lichtstrahlen 2 werden über eine Ablenkeinheit periodisch innerhalb eines Erfassungsbereichs abgelenkt. Im vorliegenden Fall besteht die Ablenkeinheit aus einem motorisch getriebenen Polygonspiegelrad 5. Das Polygonspiegelrad 5 ist um eine senkrecht zur Zeichenebene verlaufende Drehachse drehbar. Die Lichtstrahlen 2 werden an den Facetten 6 des Polygonspiegelrads 5 abgelenkt.

Dadurch werden die Lichtstrahlen 2 über einen auf einem Objekt 7 angeordneten Barcode 8 geführt, der in bekannter Weise aus einer Folge von hellen und dunklen Strichelementen besteht. Die bei der Detektion des Barcodes 8 erhaltenen Empfangssignale des Empfängers 4 bilden ein amplitudenmoduliertes Intensitätssignal, wobei in der Amplitudenmodulation des Intensitätssignals das Kontrastmuster des Barcodes 8 enthalten ist.

Figur 2 zeigt ein weiteres Beispiel der optischen Sensorkomponenten des als Barcodeleser ausgebildeten optischen Sensors 1. Im vorliegenden Fall ist als Empfänger 4 ein Bildsensor, beispielsweise ein CMOS- oder CCD-Array vorgesehen. Dem Bildsensor ist als Sender 3 eine Beleuchtungseinheit, beispielsweise eine Leuchtdiodenanordnung zugeordnet. Auch in diesem Fall wird ein Barcode 8 auf einem Objekt 7 detektiert, wie Figur 2 zeigt. Die Ausgangssignale der Empfangselemente des Empfängers 4 liefern wieder ein amplitudenmoduliertes Intensitätssignal, wobei in der Amplitudenmodulation das Kontrastmuster des Barcodes 8 kodiert ist.

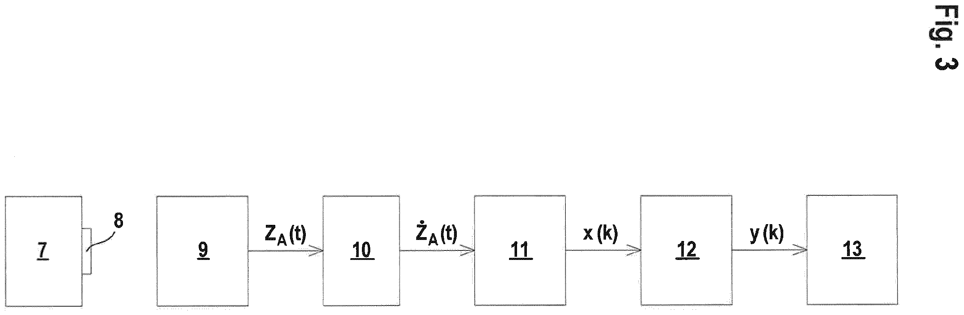

Figur 3 zeigt ein Blockschaltbild des optischen Sensors 1. In Figur 3 sind schematisch die optischen Sensorkomponenten zur Erfassung des Barcodes 8 auf dem Objekt 7, wie in den Figuren 1 und 2 dargestellt, als Scanner Frontend 9 dargestellt. Die dort generierten zeitabhängigen Empfangssignale *z_{A}*(*t*) werden in einem Differenzierer 10 differenziert. Die differenzierten Empfangssignale *ż_{A}*(*t*) werden einem Analog-Digital-Wandler 11 zugeführt. Dort werden die differenzierten Empfangssignale abgetastet und digitalisiert.

Die am Ausgang des Analog-Digital-Wandlers 11 anstehenden abgetasteten Empfangssignale x(k) werden einer Auswerteeinheit in Form einer Rechnereinheit zugeführt. Die Auswerteeinheit weist ein neuronales Netz 12 und eine diesem nachgeordnete Einheit zur Kantendetektion 13 auf.

Die Barcodes 8 weisen eine Folge von hellen und dunklen Modulen auf. Die Auswertung zur Dekodierung der Barcodes 8 erfolgt in der Einheit zur Kantentendetektion 13 derart, dass anhand der differenzierten Empfangssignale die Kantenlagen der Hell-Dunkel-Übergänge der Barcodes 8 erfasst werden, die durch die Extremstellen der differenzierten Empfangssignale gegeben sind.

Durch den begrenzten Aussteuerbereich des Analog-Digital-Wandlers 11 erfolgt je nach Pegel der Empfangssignale, die zusätzlich zu den differenzierten Empfangssignalen in der Auswerteeinheit zur Detektion der Barcodes 8 herangezogen werden, eine Begrenzung der differenzierten Empfangssignale, wodurch Informationen über die Barcodes 8 verloren gehen.

Erfindungsgemäß erfolgt im neuronalen Netz 12 eine Kompensation der Begrenzung vom Analog-Digital-Wandler 11 eingelesenen abgetasteten Empfangssignalen. Durch diese Kompensation werden Begrenzungen in den abgetasteten Empfangssignalen rückgängig gemacht, so dass verlorene Kanteninformationen in den abgetasteten Empfangssignalen in den Ausgangssignalen *y*(*k*) des neuronalen Netzes 12 wiedergewonnen werden.

Hierzu erfolgt für das neuronale Netz 12 ein Training, das vor dem Arbeitsbetrieb des optischen Sensors 1 durchgeführt wird.

Für ein solches Training wird eine möglichst große Anzahl von abgetasteten Empfangssignalen und zugeordneten Soll-Ausgangssignalen vorgegeben. Vorteilhaft werden im Training abgetastete Empfangssignale und zugeordnete Soll-Ausgangssignale für unterschiedliche Lesesituationen vorgegeben.

Mit dem durch das Training optimierten neuronalen Netz 12 werden nicht nur Verluste von Kanteninformationen in den differenzierten Empfangssignalen wiedergewonnen. Vielmehr wird mit dem neuronalen Netz 12 auch eine Rauschunterdrückung erzielt. Zudem kann mit dem neuronalen Netz 12 der Lesebereich des neuronalen Netzes 12 vergrößert werden.

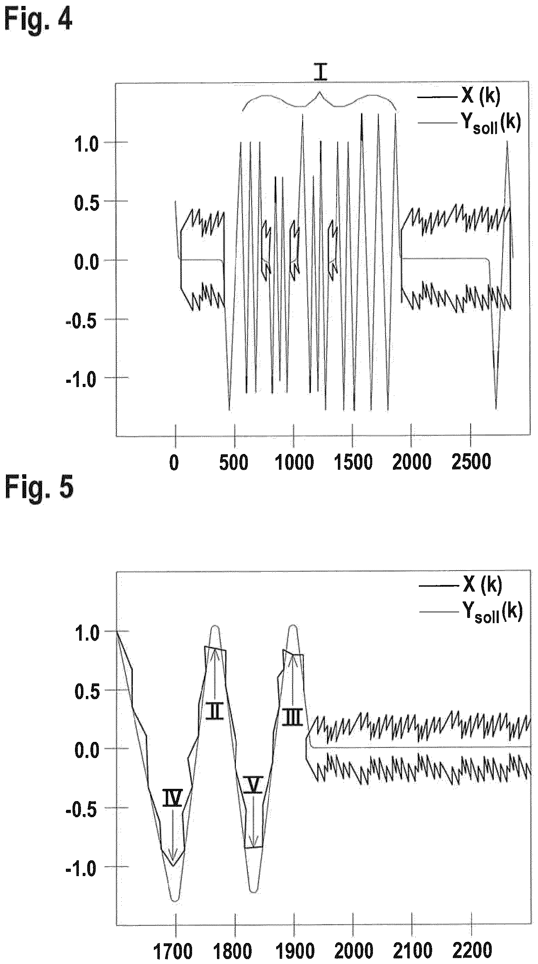

Die Wirkungsweise des neuronalen Netzes 12 ist in den Figuren 4 bis 7 veranschaulicht.

Figur 4 zeigt den zeitlichen Verlauf des abgetasteten Empfangssignal *x*(*k*) und im Vergleich hierzu das Soll-Ausgangssignal *yₛₒₗₗ*(*k*), das einem idealen Signalverlauf entspricht. Figur 5 zeigt einen vergrößerten Ausschnitt von Figur 4.

In Figur 4 ist mit I ein Bereich dargestellt, in welchem ein Barcode 8 gelesen wird. Die Extremstellen des abgetasteten Empfangssignals *x*(*k*) beziehungsweise des Soll-Ausgangssignals *yₛₒₗₗ*(*k*) geben die Kantenlagen der Hell-Dunkel-Übergänge des Barcodes 8 an.

Wie Figur 5 zeigt, sind durch den Analog-Digital-Wandler 11 die Extremstellen des abgetasteten Empfangssignals *x*(*k*) begrenzt (Bereiche II, III, IV, V), so dass Kanteninformationen im abgetasteten Empfangssignal verloren gegangen sind, wie der Vergleich mit dem Soll-Ausgangssignal *_{ysoll}*(*k*) zeigt.

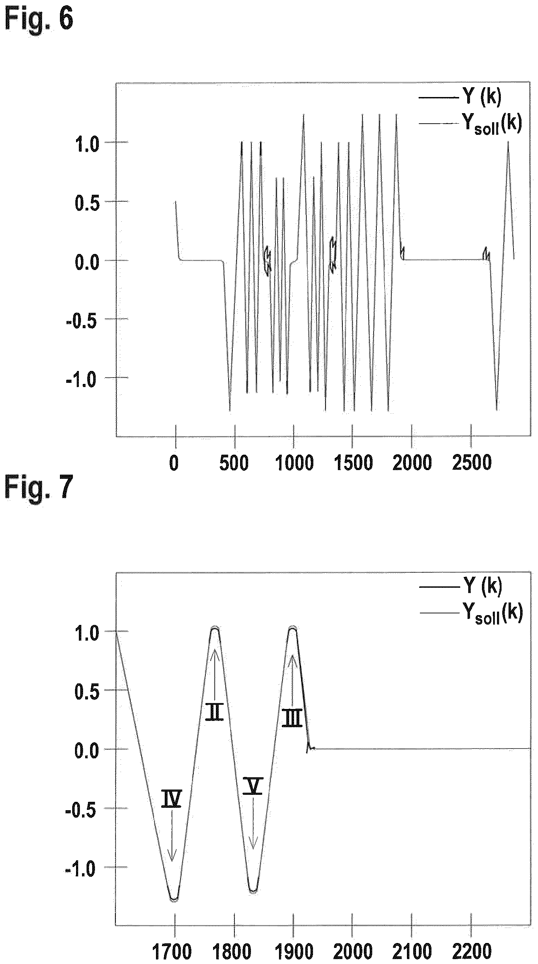

Figur 6 zeigt den zeitlichen Verlauf des mit dem neuronalen Netz 12 erhaltenen Ausgangssignals y(*k*) und im Vergleich hierzu das Soll-Ausgangssignal *_{ysoll}*(*k*). Figur 7 zeigt einen vergrößerten Ausschnitt von Figur 6.

Wie Figur 7 zeigt, ist in den Bereichen II, III, IV, V (entsprechend den Bereichen II, III, IV, V von Figur 5) durch das neuronale Netz 12 die Begrenzung des Analog-Digital-Wandlers 11 kompensiert, das heißt die Extremstellen des Ausgangssignals y(*k*) entsprechen nahezu identisch den Extremstellen des Soll-Ausgangssignals *yₛₒₗₗ*(*k*), das heißt im abgetasteten Empfangssignal verlorene Kanteninformationen sind im Ausgangssignal y(*k*) des neuronalen Netzes 12 wiedergewonnen, wodurch in der Einheit zur Kantendetektion 13 eine exakte, fehlerfreie Dekodierung des Barcodes 8 ermöglicht wird.

### Bezugszeichenliste

- (1): Optischer Sensor
- (2): Lichtstrahl
- (3): Sender
- (4): Empfänger
- (5): Polygonspiegelrad
- (6): Facette
- (7): Objekt
- (8): Barcode
- (9): Scanner Frontend
- (10): Differenzierer
- (11): Analog-Digital-Wandler
- (12): Neuronales Netz
- (13): Einheit zur Kantendetektion

## Patentansprüche

1. Optischer Sensor (1) zur Erfassung von Codes, mit einem Lichtstrahlen (2) emittierenden Sender (3) und einem Lichtstrahlen (2) empfangenden Empfänger (4), welche zur Abtastung von Codes ausgebildet sind, und mit einer Auswerteeinheit, welche zur Ermittlung von Codeinformationen der Codes in Abhängigkeit von Empfangssignalen des Empfängers (4) ausgebildet ist, **dadurch gekennzeichnet, dass** die Empfangssignale des Empfängers (4) einer Auswerteschaltung zugeführt sind, in welcher aus den Empfangssignalen abgetastete Empfangssignale generiert werden, und dass ein neuronales System vorgesehen ist, wobei die Auswerteschaltung einen Differenzierer (10), in welchem die Empfangssignale differenziert werden, und einen diesem nachgeordneten Analog-Digital-Wandler (11) aufweist, wobei die im Analog-Digital-Wandler (11) generierten abgetasteten Empfangssignale der Auswerteeinheit zugeführt werden, wobei das neuronale System Bestandteil der Auswerteeinheit ist und wobei die Auswerteeinheit eine Einheit zur Kantendetektion (13) aufweist, wobei durch das neuronale System durch die von der Auswerteschaltung verursachte Begrenzung der Pegel der Empfangssignale verloren gegangene Codeinformationen zumindest teilweise wiedergewonnen werden und dadurch Begrenzungen der Pegel der abgetasteten Empfangssignale kompensiert werden.

2. Optischer Sensor (1) nach Anspruch 1, **dadurch gekennzeichnet, dass** das neuronale System ein neuronales Netz (12) ist.

3. Optischer Sensor (1) nach einem der Ansprüche 1 oder 2, **dadurch gekennzeichnet, dass** die Einheit zur Kantendetektion (13) dem neuronalen System nachgeordnet ist.

4. Optischer Sensor (1) nach einem der Ansprüche 1 bis 3, **dadurch gekennzeichnet, dass** dieser zur Erfassung von Barcodes (8) ausgebildet ist.

5. Optischer Sensor (1) nach einem der Ansprüche 1 bis 4, **dadurch gekennzeichnet, dass** dieser als Scanner oder als Kamerasensor ausgebildet ist.

6. Optischer Sensor (1) nach einem der Ansprüche 1 bis 5, **dadurch gekennzeichnet, dass** mit diesem innerhalb eines Lesebereichs Codes erfassbar sind.

7. Optischer Sensor (1) nach einem der Ansprüche 1 bis 6, **dadurch gekennzeichnet, dass** für ein Training eine Anzahl von abgetasteten Empfangssignalen und zugeordneten Soll-Ausgangssignalen am Ausgang des neuronalen Systems vorgegeben sind.

8. Optischer Sensor (1) nach Anspruch 7, **dadurch gekennzeichnet, dass** im Training abgetastete Empfangssignale und zugeordnete Soll-Ausgangssignale für unterschiedliche Lesesituationen vorgegeben werden.

9. Optischer Sensor (1) nach Anspruch 8, **dadurch gekennzeichnet, dass** das neuronale System zur Durchführung einer Rauschunterdrückung ausgebildet ist.

10. Optischer Sensor (1) nach einem der Ansprüche 8 oder 9, **dadurch gekennzeichnet, dass** mittels des neuronalen Systems der Lesebereich vergrößerbar ist.

11. Verfahren zur Erfassung von Codes, mit einem Lichtstrahlen (2) emittierenden Sender (3) und einem Lichtstrahlen (2) empfangenden Empfänger (4), welche zur Abtastung von Codes ausgebildet sind, und mit einer Auswerteeinheit, welche zur Ermittlung von Codeinformationen der Codes in Abhängigkeit von Empfangssignalen des Empfängers (4) ausgebildet ist, **dadurch gekennzeichnet, dass** die Empfangssignale des Empfängers (4) einer Auswerteschaltung zugeführt sind, in welcher aus den Empfangssignalen abgetastete Empfangssignale generiert werden, und dass ein neuronales System vorgesehen ist, wobei die Auswerteschaltung einen Differenzierer (10), in welchem die Empfangssignale differenziert werden, und einen diesem nachgeordneten Analog-Digital-Wandler (11) aufweist, wobei die im Analog-Digital-Wandler (11) generierten abgetasteten Empfangssignale der Auswerteeinheit zugeführt werden, wobei das neuronale System Bestandteil der Auswerteeinheit ist und wobei die Auswerteeinheit eine Einheit zur Kantendetektion (13) aufweist, wobei durch das neuronale System durch die von der Auswerteschaltung verursachte Begrenzung der Pegel der Empfangssignale verloren gegangene Codeinformationen zumindest teilweise wiedergewonnen werden und dadurch Begrenzungen der Pegel der abgetasteten Empfangssignale kompensiert werden.

## Claims

1. An optical sensor (1) for detecting codes, having a transmitter (3) emitting light beams (2) and a receiver (4) receiving light beams (2), which are designed to scan codes, and having an evaluation unit which is designed to determine code information of the codes as a function of received signals of the receiver (4), **characterised in that** the received signals of the receiver (4) are fed to an evaluation circuit in which sampled received signals are generated from the received signals, and **in that** a neural system is provided, the evaluation circuit comprising a differentiator (10), in which the received signals are differentiated, and an analogue-to-digital converter (11) arranged downstream thereof, wherein the sampled received signals generated in the analogue-to-digital converter (11) are fed to the evaluation unit, wherein the neural system is a component of the evaluation unit and wherein the evaluation unit has a unit for edge detection (13), wherein code information lost due to the limitation of the levels of the received signals caused by the evaluation circuit is at least partially recovered by the neural system and thereby limitations of the levels of the sampled received signals are compensated.

2. An optical sensor (1) according to claim 1, **characterised in that** the neural system is a neural network (12).

3. An optical sensor (1) according to one of claims 1 or 2, **characterised in that** the unit for edge detection (13) is arranged downstream of the neural system.

4. An optical sensor (1) according to one of claims 1 to 3, **characterised in that** it is designed to detect barcodes (8).

5. An optical sensor (1) according to one of claims 1 to 4, **characterised in that** it is designed as a scanner or as a camera sensor.

6. An optical sensor (1) according to one of claims 1 to 5, **characterised in that** it can be used to detect codes within a reading range.

7. An optical sensor (1) according to one of claims 1 to 6, **characterised in that** a number of sampled received signals and assigned target output signals are predetermined at the output of the neuronal system for training.

8. An optical sensor (1) according to claim 7, **characterised in that** sampled received signals and assigned setpoint output signals for different reading situations are specified during training.

9. An optical sensor (1) according to claim 8, **characterised in that** the neural system is designed to perform noise suppression.

10. An optical sensor (1) according to one of claims 8 or 9, **characterised in that** the reading range can be enlarged by means of the neuronal system.

11. A method for detecting codes, having a transmitter (3) emitting light beams (2) and a receiver (4) receiving light beams (2), which are designed to scan codes, and having an evaluation unit which is designed to determine code information of the codes as a function of received signals of the receiver (4), **characterised in that** the received signals of the receiver (4) are fed to an evaluation circuit in which sampled received signals are generated from the received signals, and **in that** a neurological system is provided, the evaluation circuit comprising a differentiator (10), in which the received signals are differentiated, and an analogue-to-digital converter (11) arranged downstream thereof, wherein the sampled received signals generated in the analogue-to-digital converter (11) are fed to the evaluation unit, wherein the neural system is a component of the evaluation unit and wherein the evaluation unit has a unit for edge detection (13), wherein code information lost due to the limitation of the levels of the received signals caused by the evaluation circuit is at least partially recovered by the neural system and thereby limitations of the levels of the sampled received signals are compensated.

## Revendications

1. Capteur optique (1) pour la détection de codes, comportant un émetteur (3) émettant des faisceaux lumineux (2) et un récepteur (4) recevant des faisceaux lumineux (2), qui sont conçus pour scanner des codes, et comportant une unité d'évaluation qui est conçue pour déterminer les informations des codes en fonction des signaux reçus du récepteur (4), **caractérisé en ce que** les signaux reçus du récepteur (4) sont acheminés vers un circuit d'évaluation dans lequel des signaux reçus échantillonnés sont générés à partir des signaux reçus, et **en ce qu'**un système neuronal est prévu, le circuit d'évaluation comportant un différentiateur (10), dans lequel les signaux reçus sont différenciés, et un convertisseur analogique-numérique (11) disposé en aval de celui-ci, dans lequel les signaux reçus échantillonnés générés dans le convertisseur analogique-numérique (11) sont transmis à l'unité d'évaluation, dans lequel le système neuronal est un composant de l'unité d'évaluation et dans lequel l'unité d'évaluation comporte une unité de détection des bords (13), dans laquelle les informations de code perdues en raison de la limitation des niveaux des signaux reçus causée par le circuit d'évaluation sont au moins partiellement récupérées par le système neuronal et les limitations des niveaux des signaux reçus échantillonnés sont ainsi compensées.

2. Capteur optique (1) selon la revendication 1, **caractérisé en ce que** le système neuronal est un réseau neuronal (12).

3. Capteur optique (1) selon l'une des revendications 1 ou 2, **caractérisé en ce que** l'unité de détection des bords (13) est disposée en aval du système neuronal.

4. Capteur optique (1) selon l'une des revendications 1 à 3, **caractérisé en ce qu'**il est conçu pour détecter des codes-barres (8).

5. Capteur optique (1) selon l'une des revendications 1 à 4, **caractérisé en ce qu'**il est conçu comme un scanner ou comme un capteur de caméra.

6. Capteur optique (1) selon l'une des revendications 1 à 5, **caractérisé en ce qu'**il peut être utilisé pour détecter des codes dans une plage de lecture.

7. Capteur optique (1) selon l'une des revendications 1 à 6, **caractérisé en ce qu'**un nombre de signaux reçus échantillonnés et de signaux de sortie cibles attribués sont prédéterminés à la sortie du système neuronal pour l'entraînement.

8. Capteur optique (1) selon la revendication 7, **caractérisé en ce que** les signaux reçus échantillonnés et les signaux de sortie de consigne assignés pour différentes situations de lecture sont spécifiés pendant la formation.

9. Capteur optique (1) selon la revendication 8, **caractérisé en ce que** le système neuronal est conçu pour effectuer une suppression du bruit.

10. Capteur optique (1) selon l'une des revendications 8 ou 9, **caractérisé en ce que** la plage de lecture peut être élargie au moyen du système neuronal.

11. Procédé de détection de codes, comportant un émetteur (3) émettant des faisceaux lumineux (2) et un récepteur (4) recevant des faisceaux lumineux (2), qui sont conçus pour scanner des codes, et comportant une unité d'évaluation qui est conçue pour déterminer les informations des codes en fonction des signaux reçus du récepteur (4), **caractérisé en ce que** les signaux reçus du récepteur (4) sont transmis à un circuit d'évaluation dans lequel des signaux reçus échantillonnés sont générés à partir des signaux reçus, et **en ce qu'**un système neurologique est fourni, le circuit d'évaluation comprenant un différenciateur (10), dans lequel les signaux reçus sont différenciés, et un convertisseur analogique-numérique (11) disposé en aval de celui-ci, dans lequel les signaux reçus échantillonnés générés dans le convertisseur analogique-numérique (11) sont envoyés à l'unité d'évaluation, dans lequel le système neuronal est un composant de l'unité d'évaluation et dans lequel l'unité d'évaluation comporte une unité de détection des bords (13), dans laquelle les informations de code perdues en raison de la limitation des niveaux des signaux reçus causée par le circuit d'évaluation sont au moins partiellement récupérées par le système neuronal et les limitations des niveaux des signaux reçus échantillonnés sont ainsi compensées.
